Europäisches Patentamt

(19) European Patent Office

Office européen des brevets

(11) Veröffentlichungsnummer: **0 027 788**
**A1**

(12) **EUROPÄISCHE PATENTANMELDUNG**

(21) Anmeldenummer: **80890110.2**

(22) Anmeldetag: **26.09.80**

(51) Int. Cl.³: **B 29 F 1/022**
**B 29 D 23/02**

(30) Priorität: **11.10.79 AT 6616/79**

(43) Veröffentlichungstag der Anmeldung:
**29.04.81 Patentblatt 81/17**

(84) Benannte Vertragsstaaten:
**BE CH DE FR GB IT LI NL SE**

(71) Anmelder: **Österreichische Schiffswerften**
**Aktiengesellschaft Linz-Korneuburg**
**Hafenstrasse 61**
**A 4010 Linz(AT)**

(72) Erfinder: **Anger, Anton**
**Auf der Gugl 36**
**A-4020 Linz(AT)**

(74) Vertreter: **Hübscher, Gerhard, Dipl.-Ing. et al,**
**Patentanwälte Dipl.-Ing. Gerhard Hübscher Dipl.-Ing.**
**Helmut Hübscher Dipl.-Ing. Heiner Hübscher**
**Spittelwiese 7**
**A-4020 Linz(AT)**

(54) Spritzgussform zum Herstellen von Fittingen und Rohrverbindern aus thermoplastischem Kunststoff.

(57) Bei einer Spritzgußform zum Herstellen von Fittingen und Rohrverbindern aus thermoplastischem Kunststoff, die wenigstens eine Muffe (4) mit einer umlaufenden Ringnut (5) aufweisen, sind eine zwei- oder mehrteilige Außenform (1) und ein Formkern (3) der für die Entformung in seiner Längsrichtung verstellbar ist und mit dem zur Bildung der Ringnut ein starrer Ringwulst (12) axial unverrückbar verbunden ist, vorhanden. Zur Ausformung der Außenkontur des Muffenendes und der Ringnut ab dem den größten Durchmesser aufweisenden Bereich dient eine Formhülse (11).

Zur Erzielung einer einfachen Bauweise, geringer Gesamtabmessungen der Form und um auch die Herstellung spitzwinkeliger Abzweigstücke zu ermöglichen, ist auch die Formhülse (11) mit dem Formkern (3) verbunden, so daß das Muffenende beim Entformen aus dem so gebildeten Ringspalt (16) des Formkernes herausgezogen wird. Dieser Ringspalt (16) kann sich zum Ende des Formkernes (3) hin verjüngen, um das Entformen zu erleichtern.

FIG.2

Spritzgußform zum Herstellen von Fittingen und Rohrverbindern aus thermoplastischem Kunststoff

Die Erfindung betrifft eine Spritzgußform zum Herstellen
von Fittingen und Rohrverbindern aus thermoplatischem
Kunststoff, die wenigstens eine Muffe mit einer mit Abstand vom Ende vorgesehenen, umlaufenden Ringnut aufweisen, mit einer zwei- oder mehrteiligen Außenform
und einem Formkern, die miteinander bei geschlossener
Form das Formnest für den Fitting bilden, wobei
mit dem für die Entformung in seiner Längsrichtung
verstellbaren Formkern ein starr ausgebildeter Ringwulst
zur Ausformung der Ringnut wenigstens in Längsrichtung
unverrückbar verbunden ist und wobei für die Außenkontur
des Muffenendes und der Ringnut ab dem den größten Durchmesser aufweisenden Bereich eine Formhülse vorgesehen ist.
Spritzgußformen dieser Art zeichnen sich gegenüber
allen anderen der gleichen Aufgabe dienenden Spritzgußformen durch eine verhältnismäßig einfache Bauweise aus.
Für die Entformung der Ringnut, deren größer als die Wandstärke gehaltene Tiefe größenordnungsmäßig 10 % der Lichtweite der Muffe bzw. bei Lichtweiten über 50 mm wenigstens
5 mm beträgt, und des anschließenden Muffenendes wird eine
besondere Eigenschaft thermoplastischer Kunststoffe,
nämlich das sogenannte thermoelastische Verformungsvermögen, ausgenützt, bei dem in einem bestimmten, für den
jeweiligen Werkstoff charakteristischen Temperaturbereich
starke Verformungen möglich sind, wobei das Material nach der Verformung trotzdem durch den sogenannten Memory-Effekt in jene Form zurückkehrt, die ihm beim Urformprozeß erteilt wurde.

Bisher war man der Ansicht, daß eine einwandfreie Entformung des Muffenendes nur dann möglich sei, wenn man das Muffende vor dem Ziehen des Formkernes und der thermoelastischen Verformung dieses Muffenendes durch den dabei herausgezogenen Ringwulst an seiner Außenseite völlig frei gebe. Um dies zu erreichen, wurde entweder die meist mehrteilige Außenform vor dem Ziehen des Kernes um das genannte Ausmaß so weit geöffnet, daß ein ungehinderter Austritt des Ringwulstes aus dem Muffenende möglich war, oder man verwendete den schon erwähnten in Ausziehrichtung des Kernes verstellbaren Formteil als eigene, auf dem Kern geführte Formhülse, die mit einem Stelltrieb verbunden und mit Mitnehmern für den Kern versehen war, so daß sie beim Ausziehen den Kern erst dann im Sinne des Ausziehens mitnahm, wenn sie selbst die Außenseite des Muffenendes freigegeben hatte. Die erwähnte Formhülse dient hier der alleinigen Kraftübertragung auf den Kern beim Ziehen des Kernes, weshalb es notwendig wird, die Formhülse entsprechend starkwandig auszubilden. Die Mitnahme des Kernes beim Ausziehen erfolgt über Anschläge. Es muß dafür gesorgt werden, daß Kern und Formhülse in der für den Spritzgußvorgang bereiten Arbeitsstellung genau vorbestimmte Lagen einnehmen, wobei sich wegen der notwendigen Relativverstellbarkeit der genannten Teile Schwierigkeiten ergeben können und überdies bei der Herstellung der Form genaue Passungen eingehalten werden müssen. Wegen des notwendigen, vergleichsweise großen Durchmessers der Formhülse ergeben sich große Bohrungen in der Form und im Vergleich zum Endprodukt insgesamt auch große Formabmessungen. Es kann bei der Herstellung von spitzwinkeligen Abzweigern schwierig oder unmöglich werden, bei der bisherigen Bauweise der Spritzgußform die Hülsen bzw. Formbohrungen unterzubringen, so daß dann andere Spritzgußformen, beispielsweise solche mit lösbaren oder einklappbaren Kernringen, verwendet werden müssen.

Aufgabe der Erfindung ist es, eine Spritzgußform der genannten Art weiter zu vereinfachen und die aufgezeigten Schwierigkeiten zu beseitigen.

Diese Aufgabe wird dadurch gelöst, daß die Formhülse ebenfalls mit dem Formkern wenigstens in Längsrichtung unverrückbar verbunden ist, so daß das Muffenende beim Entformen unter elastischer Verformung aus dem so gebildeten Ringspalt des Formkernes herausziehbar ist.

Die Erfindung beruht auf der überraschenden Erkenntnis, daß bei den meisten vorkommenden Querschnittsformen der Ringnut die erwähnte Art der Entformung vorgenommen werden kann, wobei selbstverständlich die richtige Entformungstemperatur eingehalten werden muß.

Der Entformungsvorgang wird erleichtert, wenn nach einer weiteren Ausbildung des Erfindungsgegenstandes die formgebenden Flächen der Formhülse nicht/parallel zu den korres-pondierenden Flächen am Formkern ausgebildet sind, so daß der Ringspalt eine sich zum Ende des Kernes hin verlaufende Verjüngung aufweist. Dadurch wird gewährleistet, daß der aus dem Spalt herauszuziehende Teil der Muffe sofort nach der ersten geringfügigen Verstellung nur mehr an der einen Spaltwand anliegt, so daß die gleiche Wirkung eintritt, wie wenn seine Außenseite vollkommen freigegeben würde.

Ein leicht herstellbarer dichter Abschluß des Formnestes wird dadurch erreicht, daß bei geschlossener Form die Formhülse mit einer konischen Stirnfläche an eine passende Anschlagfläche der Außenform anpreßbar ist.

In der Zeichnung ist der Erfindungsgegenstand beispielsweise veranschaulicht. Es zeigt

Fig. 1 wesentliche Teile einer erfindungsgemäßen Sprtizgußform in der dem Spritzgußvorgang entsprechenden Arbeitsstellung im Teillängsschnitt, wobei nur die obere Formhälfte dargestellt ist und alle Nebenaggregate weggelassen wurden,

Fig. 2 in der Fig. 1 entsprechender Darstellungsweise
eine zweite Arbeitsstellung nach dem Entformen des
Muffenendes und

Fig. 3 in größerem Maßstab ein Teilstück eines Muffenendes
im Längsschnitt.

Es sei angenommen, daß die Spritzgußform eine aus zwei
Formhälften bestehende Außenform 1 und einen Formkern 3
aufweist. Die Außenform 1 kann nach einer normal zur
Zeichenebene liegenden, beispielsweise mit der Kernachse
2 zusammenfallenden Ebene geteilt sein. Normalerweise
werden so viele Formkernsätze verwendet, als der herzustellende Spritzling Schenkel besitzt. Für einen bogenförmigen Fitting können zwei auf Gehrung im Bogenscheitel
stoßende Formkerne und für ein T-Stück drei Formkerne für
die verschiedenen Schenkel verwendet werden. Der Großteil
eines herzustellenden Fittings wird in einem nicht dargestellten, rechts an die sichtbaren Teile anschließenden
Bereich der Form hergestellt, in welchem Bereich auch die
zur Spritzgußmaschine führenden Einlässe vorgesehen sind.
Es wurde nur jener Bereich der Spritzgußform dargestellt,
der zur Ausformung einer Muffe 4 des Fittings mit im Endbereich vorgesehener Ringnut 5 dient. Die Ringnut 5 nimmt
normalerweise eine Dichtung auf. Am Muffenende ist ein
kurzer Stützfortsatz 6 ausgebildet. Die Ringnut 5 besitzt
muffenseitig eine steile Flanke und endseitig eine konisch
verlaufende Flanke. Die formgebenden Teile für den steilen
Bereich 7 und den Außenbereich 8 der Ringnutwandung werden
zwischen dem Formkern 3 und der Außenform 1 bestimmt. Die
formgebenden Teile für die Flanke 9 und den Stützfortsatz
6 befinden sich am Formkern 3. Zu diesem Zweck ist der
Formkern 3 abgesetzt und mit einer Kernhülse 10 starr verbunden, über die vom Ende her eine weitere Formhülse 11
reicht. Die Kernhülse 10 trägt einen Ringwulst 12 zur Ausformung der Ringnut 5. Die Formhülse 11 ragt bis zu dem
Bereich größten Durchmessers über den Ringwulst 12 und
trägt am Ende eine konische Stirnfläche 13, die bei geschlossener Form an eine passende Anschlagfläche 14 der Außenform anpreßbar ist. Im Endbereich der Formhülse 11 kann noch eine Heizeinrichtung 15 untergebracht werden.

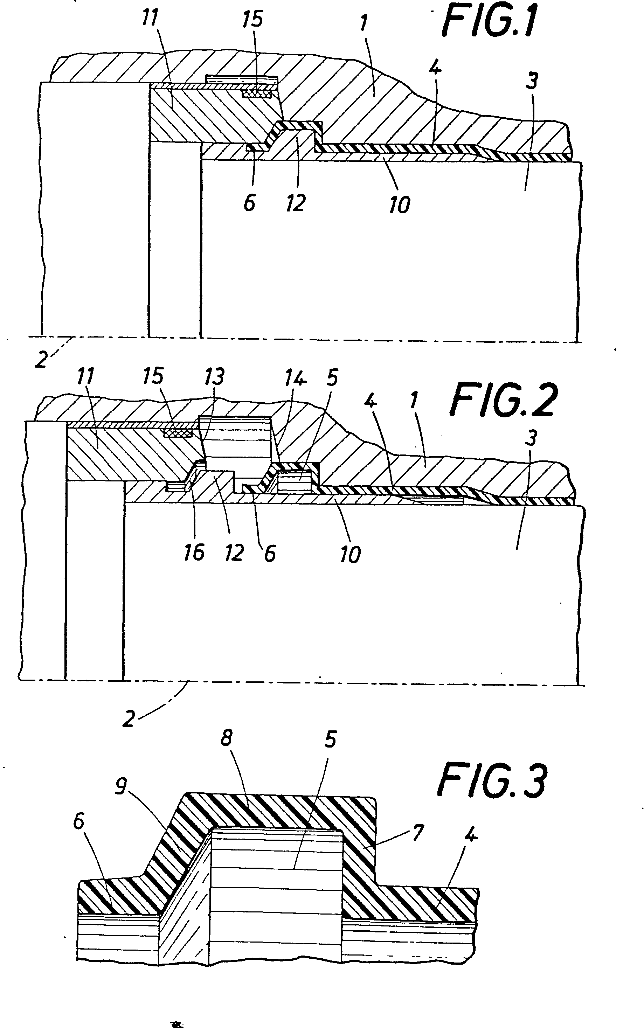

In Fig. 1 ist die Form in Spritzgußstellung dargestellt. Der Formkern 3 ist gegenüber den Formhälften der Außenform 1 fixiert. Nach dem Spritzgußvorgang bleibt die Außenform 1 zunächst geschlossen und der Formkern 3 wird mit Hilfe eines Stelltriebes in die Stellung nach Fig. 2 verstellt. Der Stelltrieb kann über ein Programmsteuerwerk nach Ablauf einer bestimmten Zeit vom Spritzgußvorgang oder beim Erreichen einer bestimmten Temperatur am Ende des Spritzlinges, d.h. am Stützfortsatz 6 oder an der Flanke 9 verstellt werden. Beim genannten Verstellvorgang treten der Stützfortsatz 6 und die daran anschließende Flanke 9 aus dem Ringspalt 16 aus. Der Ringwulst 12 befindet sich dann außerhalb des Stützfortsatzes 6. Das Entformen wird dadurch erleichtert, daß, wie Fig. 3 zeigt, beim Stützfortsatz 6 und bei der anschließenden Flanke 9 durch entsprechende Anordnung der formgebenden Flächen am Ringspalt 16 die Außenkonturen nicht parallel zu den Innenkonturen verlaufen, so daß sich der Ringspalt und damit die Muffenwandung gegen das freie Muffende hin verjüngt. Der Stützfortsatz 6 kann sich neben dem Ringwulst 12 auf der Kernhülse 10 abstützen. Nun wird der Spritzling weiter abgekühlt, wonach der Formkern 3 vollständig gezogen wird. Erst dann ist es notwendig, die Außenform 1 vollständig zu öffnen, um den Spritzling entnehmen zu können. Der Ringwulst 12 könnte unter Weglassung der Kernhülse 10 auf dem dann der Außenkontur der Kernhülse folgenden Kern 3 vorgesehen sein. Es wäre in Sonderfällen sogar möglich, auch die Formhülse 11 als einteiligen Bestandteil des Kernes 3 auszuführen.

Patentansprüche:

1. Spritzgußform zum Herstellen von Fittingen und Rohrverbindern aus thermoplastischem Kunststoff, die wenigstens eine Muffe mit einer mit Abstand vom Ende vorgesehenen, umlaufenden Ringnut aufweisen, mit einer zwei- oder mehrteiligen Außenform und einem Formkern, die miteinander bei geschlossener Form das Formnest für den Fitting bilden, wobei mit dem für die Entformung in seiner Längsrichtung verstellbaren Formkern ein starr ausgebildeter Ringwulst zur Ausformung der Ringnut wenigstens in Längsrichtung unverrückbar verbunden ist und wobei für die Außenkontur des Muffenendes und der Ringnut ab dem den größten Durchmesser aufweisenden Bereich eine Formhülse vorgesehen ist, dadurch gekennzeichnet, daß die Formhülse (11) ebenfalls mit dem Formkern (3) wenigstens in Längsrichtung unverrückbar verbunden ist, so daß das Muffenende beim Entformen unter elastischer Verformung aus dem so gebildeten Ringspalt (16) des Formkernes herausziehbar ist.

2. Spritzgußform nach Anspruch 1, dadurch gekennzeichnet, daß die formgebenden Flächen der Formhülse (11) nicht parallel zu den korrespondierenden Flächen am Formkern (3) ausgebildet sind, so daß der Ringspalt (16) eine sich zum Ende des Formkernes (3) hin verlaufende Verjüngung aufweist.

3.  Spritzgußform nach Anspruch 1 oder 2, dadurch gekennzeichnet, daß bei geschlossener Form die Formhülse
(11) mit einer konischen Stirnfläche (13) an eine Anschlagfläche (14) der Außenform (1) anpreßbar ist.

*FIG.1*

*FIG.2*

*FIG.3*

## EUROPÄISCHER RECHERCHENBERICHT

Europäisches
Patentamt

Nummer der Anmeldung

EP 80 89 0110.2

### EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| | DE - A1 - 2 542 045 (POLOPLAST KUNST-STOFFWERK DER ETERNIT-WERKE L. HATSCHEK UND DER DURIT-WERKE KERN & CO.) <br> * Seite 2, Zeile 11 ff. * <br> -- | 1 |
| | DE - B2 - 2 633 050 (A. ANGER MASCHINEN-BAU GMBH) <br> * Anspruch 1; Fig. 4 * <br> -- | 1 |
| | DE - A1 - 2 757 756 (A. ANGER MASCHINEN-BAU GMBH) <br> * Anspruch 1; Seite 10, Zeile 8 ff. * <br> -- | 1 |
| A | DE -A1 - 2 642 355 (OMNIPLAST GMBH & CO.) <br> * Ansprüche 1, 2 * <br> -- | |
| A | DE - A1 - 2 551 515 (W. BENNER) <br> * Anspruch * <br> -- | |
| A | DE - A1 - 2 557 416 (SEKISUI KAGAKU KOGYO K.K.) <br> * Anspruch 1 * <br> ---- | |

**KLASSIFIKATION DER ANMELDUNG (Int. Cl.³)**

B 29 F 1/022
B 29 D 23/02

**RECHERCHIERTE SACHGEBIETE (Int. Cl.³)**

B 29 C 1/14
B 29 C 17/02
B 29 C 27/00
B 29 D 23/02
B 29 F 1/00

**KATEGORIE DER GENANNTEN DOKUMENTE**

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

X Der vorliegende Recherchenbericht wurde für alle Patentansprüche erstellt.

| Recherchenort | Abschlußdatum der Recherche | Prüfer |
|---|---|---|
| Berlin | 21-01-1981 | BITTNER |

EPA form 1503.1 06.78